# EUROPÄISCHE PATENTSCHRIFT

(11) **EP 0 302 256 B1**
(45) Veröffentlichungstag und Bekanntmachung des Hinweises auf die Patenterteilung: **27.01.1993**
(21) Anmeldenummer: 88110924.3
(22) Anmeldetag: 08.07.1988
(51) Int. Cl.: B41F 13/02

(54) **Rollenkette für eine Papierbahneinzugsvorrichtung einer Druckmaschine**
Roller chain for a printing press web-threading device
Chaîne à rouleaux pour dispositif d'introduction de bande pour une machine à imprimer

(30) Priorität: 03.08.1987 DE 3725634
(43) Veröffentlichungstag der Anmeldung: 08.02.1989
(73) Patentinhaber: M.A.N.-ROLAND Druckmaschinen Aktiengesellschaft, 63012 Offenbach (DE)
(72) Erfinder: Handschuher, Walter, D-8901 Königsbrunn (DE)

(56) Entgegenhaltungen:
- EP-A- 0 038 450
- DE-A- 2 241 127
- DE-A- 3 048 797
- DE-B- 1 137 396
- FR-A- 405 845
- FR-A- 2 351 035

## Beschreibung

Die Erfindung betrifft eine Rollenkette für eine Papierbahneinzugsvorrichtung einer Druckmaschine, die entlang einer Führung verfahrbar ist und deren Laufrollen auf Bolzen sitzen, die durch flexible Seile verbunden sind, auf welche zur Beabstandung der Bolzen flexible Distanzelemente aufgeschoben sind.

Aus der DE-PS 22 41 127 ist eine Papierbahn-Einzugsvorrichtung einer Rollen-Rotationsdruckmaschine mit einer entlang einer Führung verfahrbaren Rollenkette bekannt. Die auf Bolzen sitzenden Rollen sind dabei durch Laschen miteinander verbunden. Aufgrund der relativ steifen Laschen ist eine Biegung dieser Kette nur in einer Ebene möglich.

Weiterhin zeigt die FR-A-405 845 eine Rollenkette, bei der statt der Laschen parallele Drähte zum Einsatz kommen. In einem Ausführungsbeispiel durchdringen die Drähte die Rollenbolzen, und zur Abstandshaltung zwischen letzteren sind auf die Drähte spiralig gerollte Distanzelemente aufgeschoben. In einen anderen Beispiel sind die Drähte um die Rollenbolzen geschlungen. Diese Ketten sind wegen höheren Material- und Herstellungsaufwandes teuer. Infolge der Verwendung zweier Drähte sind eine Biegung dieser Kette in zwei Ebenen und eine Verwindung nur begrenzt möglich.

Mit der DE-A-30 38 797 wird eine Rollenkette zum Einziehen von Materialbahnen vorgestellt, bei der zumindest teilweise Laschenpaare durch drahtförmige elastische Stäbchen ersetzt sind, die jweils mit einem Ende eine eine Rolle tragende Hülse umfassen. Auch hier trifft das zur zuvor genannten Druckschrift Gesagte zu, daß die Kette material- und herstellungsaufwendig ist und eine Verbiegung in zwei Ebenen und eine Verwindung nur begrenzt möglich sind.

Die DE-B-1 137 396 zeigt ein Drahtseil als Zugorgan für einen endlos umlaufenden Förderer. Das Drahtseil trägt vier auf zwei kreuzweise in Rollenträgern eingesteckten Rollenbolzen gelagerte Rollen. Und die Rollenträger bestehen aus ineinandergesteckten, auf die Enden der Drahtseilabschnitte aufgepreßten Hülsen. Dieses Drahtseil eignet sich nicht als Einziehorgan für Papierbahnen, da mit dem senkrecht zur Hauptbewegungsrichtung aus erforderlichen Kasten förmigen Führungen herausstehenden zweiten Rollen paar keine Leitwalzen und Wendestangen umfahren werden können. Weiterhin schränken die Hülsen die Flexibilität des Seiles unzulässig ein, und der verbleibende freie Seilbereich zwischen benachbarten Hülsen ist bruchgefährdet. Schließlich ist die Konstruktion kostenerhöhend aufwendig.

Der Erfindung liegt die Aufgabe zugrunde, eine Rollenkette der eingangs genannten Gattung konstruktiv einfach so weiterzubilden, daß diese entlang einer räumlich gekrümmten, auch Leitwalzen und Wendestangen umfahrenden Fürung beweglich ist.

Diese Aufgabe wird durch die Merkmale im Kennzeichen des Patentanspruchs 1 gelöst. Durch die Aufteilung der bei der herkömmlichen Rollenkette durch die Laschen übertragenen Zug- und Druckkräfte auf ein flexibles Seil und ebenso flexible Distanzelemente wird ein biegsames und zusätzlich um seine Längsachse verwindbares Einzugselement geschaffen, das bei allen räumlich gekrümmten Führungen, wie beispielsweise der Herumführung um Wendestangen, anwendbar ist.

Nachfolgend ist ein Ausführungsbeispiel der Erfindung anhand der Zeichnungen erklärt. Dabei zeigt
- Fig. 1: eine erfindungsgemäße Rollenkette in Seitenansicht,
- Fig. 2: eine Draufsicht zur Fig. 1,
- Fig. 3: eine vergrößerte Einzelheit aus Fig. 1 und 2,
- Fig. 4: eine Rollenkette gemäß Fig. 1 und 2 mit einer geeigneten Führung im Querschnitt.

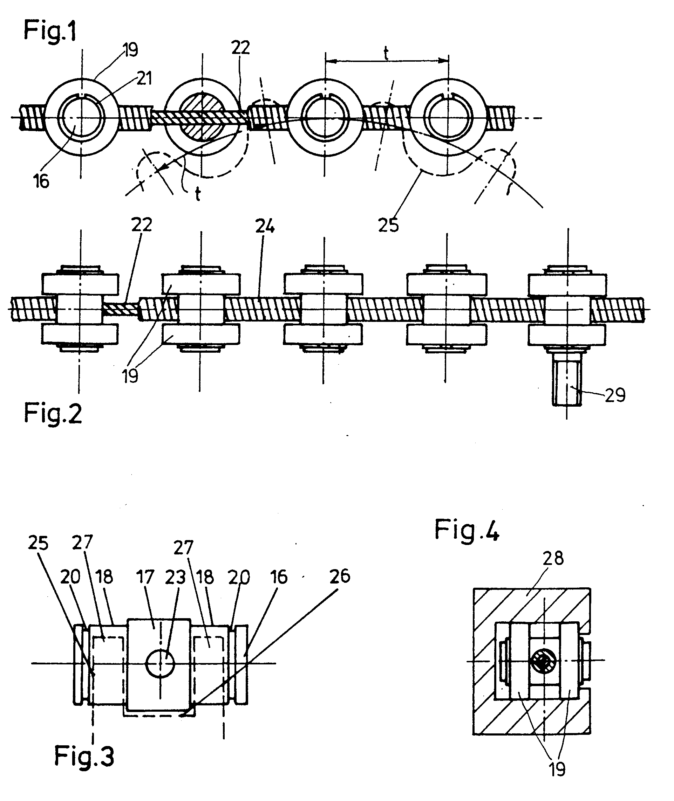

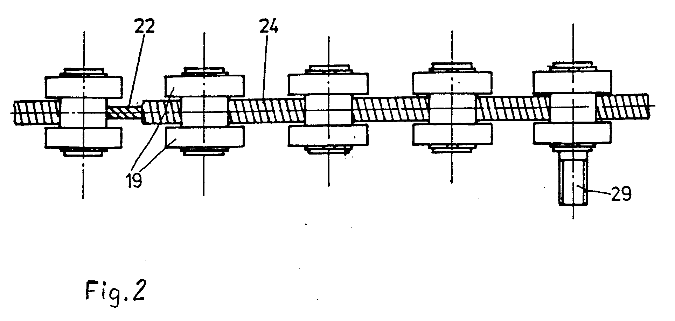

In Fig. 1 und 2 sind mehrere Glieder einer Rollenkette für eine Papierbahneinzugsvorrichtung einer Druckmaschine dargestellt.

Ein Bolzen 16 weist beiderseits eines querschnittsstärkeren Mittelteils 17 Lagerflächen 18 für darauf angeordnete Laufrollen 19 sowie daran axial nach außen anschließend Ringnuten 20 für die Aufnahme von Sicherungsringen 21 auf. Die einzelnen Bolzen 16 stehen durch ein Seil 22, welches durch im Mittelteil 17 radial verlaufende Bohrungen 23 eines jeden Bolzens 1 hindurchgeführt und mit diesen durch Quetschen verbunden ist, in Verbindung und werden durch das Seil 22 umgebende Distanzelemente 24, die als im Block gewickelte Spiralfedern ausgeführt sind, in einem Abstand voneinander gehalten, der dem Teilungsabstand t der Glieder der Rollenkette wie auch der Zahnteilung eines Kettenrades 25 entspricht (siehe Fig. 1). Das Seil 22 überträgt somit innerhalb des Einzugselements Zugkräfte; die bei Druckbeanspruchung nicht komprimierbaren Distanzelemente 24 übertragen die auftretenden Druckkräfte. Das in Fig. 1 und 3 angedeutete Kettenrad 25 für den Antrieb dieses Einzugselements weist an den Stirnseiten seiner Zähne - wie in Fig. 3 dargestellt - eine Eindrehung 26 auf, so daß die von dieser gebildeten beiden Zahnspitzen 27 im Bereich einer Antriebsstation die Distanzelemente 24 seitlich umgeben. Statt der Eindrehung 26 wäre auch eine Verwendung von zwei schmalen Kettenrädern möglich, die durch einen zwischen ihnen angeordneten Distanzring in einem Abstand voneinander gehalten werden, der etwas größer ist, als der Durchmesser eines Distanzelementes 24.

In Fig. 4 ist eine zum vorstehend beschriebenen Einzugselement passende Führung 28 gemeinsam mit diesem im Querschnitt dargestellt. Als Führung dient ein einseitig geschlitztes Vierkantprofil, dessen innerer Wandabstand ein leichtes Abrollen der Laufrollen 19 bei gleichzeitig enger Führung derselben ermöglicht. Durch den Schlitz ist das In Fig. 2 dargestellte, eine Haltevorrichtung tragende verlängerte Endstück 29 eines Bolzens 16 seitlich aus der Führung herausgeführt. Nicht dargestellte Ausnehmungen an der Unterseite der Führungen 28 ermöglichen in bestimmten Abständen den Eingriff des die Transportkräfte in die Rollenkette einleitenden Kettenrades 25.

Das vorstehend beschriebene Einzugselement hat gegenüber allen bisher bekannten den Vorteil einer noch leichteren Verwindbarkeit.

## Patentansprüche

1. Rollenkette für eine Papierbahneinzugsvorrichtung einer Druckmaschine, die entlang einer Führung (28) verfahrbar ist und deren Laufrollen (19) auf Bolzen (16) sitzen, die durch flexible Seile verbunden sind, auf welche zur Beabstandung der Bolzen (16) flexible Distanzelemente (24) aufgeschoben sind, dadurch gekennzeichnet, daß die je zwei benachbarte, Laufrollen (19) tragenden Bolzen (16) durch ein zentral angeordnetes, flexibles Seil (22) verbunden sind, das durch eine die Bolzen (16) radial durchdringende Bohrung (23) hindurchgeführt und durch Quetschen der Bolzen (16) mit diesen verbunden und in einer Kasten förmigen, auf einer Seite aufgeschlitzten Führung (28) geführt ist.

2. Rollenkette nach Anspruch 1, dadurch gekennzeichnet, daß als flexibles Seil (22) ein Stahlseil verwendet wird.

3. Rollenkette nach einem der vorhergehenden Ansprüche, dadurch gekennzeichnet, daß als Distanzelement (24) spiralförmige Druckfedern verwendet werden.

## Claims

1. Roller chain for a printing machine paper web-threading device which can be moved along a guideway (28) and whose rollers (19) are located on pins (16) which are joined by flexible cables, onto which flexible spacer elements (24) are pushed to space the pins (16) apart, characterised in that the pins (16) carrying two adjacent rollers (19) are joined by a centrally arranged flexible cable (22) which is guided through a bore (23) penetrating the pins (16) radially and is connected to the pins (16) by exerting pressure on them, and guided in a box-shaped guideway (28) slotted on one side.

2. Roller chain according to claim 1, characterised in that a steel cable is used as a flexible cable (22).

3. Roller chain according to one of the preceding claims, characterised in that spiral-shaped compression springs are used as the spacer element (24).

## Revendications

1. Chaîne à rouleaux pour un dispositif d'introduction de bande de papier d'une machine à imprimer, qui est déplaçable le long d'une glissière de guidage (28) et dont les galets de roulement (19) sont montés sur des tourillons (16) reliés par des câbles flexibles sur lesquels sont enfilées des entretoises (24) flexibles destinées à écarter les tourillons (16), caractérisée en ce que deux tourillons voisins quelconques (16), qui supportent des galets de roulement (19), sont reliés au moyen d'un câble flexible (22), disposé centralement, qui passe dans un perçage (23) traversant radialement les tourillons (16), est relié à ceux-ci par sertissage et est guidé par une glissière de guidage (28) en forme de caisson qui est entaillée sur un côté.

2. Chaîne à rouleaux selon la rev.1, caractérisée en ce qu'est utilisé comme câble flexible (22) un câble en acier.

3. Chaîne à rouleaux selon la rev.1 ou la rev.2, caractérisée en ce que sont utilisés comme entretoises (24) des ressorts de compression en forme de spirale.
